# EUROPEAN PATENT APPLICATION

(11) **EP 4 778 960 A1**
(43) Date of publication of application: **22.07.2026**
(21) Application number: 24865362.8
(22) Date of filing: 05.09.2024
(51) Int. Cl.: C08J 3/22, B32B 27/18, C08K 3/22, C08L 101/02

(54) **MASTER BATCH, COMPOSITION, NEAR-INFRARED SHIELDING TRANSPARENT RESIN MOLDED BODY, AND NEAR-INFRARED SHIELDING TRANSPARENT MULTILAYER BODY**

(30) Priority: 12.09.2023 JP 2023147506
(71) Applicant: SUMITOMO METAL MINING CO., LTD., Tokyo 105-8716 (JP)
(72) Inventor: CHONAN, Takeshi, Isa-shi, Kagoshima 895-2501 (JP); IGARI, Atsushi, Isa-shi, Kagoshima 895-2501 (JP); ITO, Takafumi, Isa-shi, Kagoshima 895-2501 (JP); KAWAGUCHI, Seigou, Yonezawa-shi, Yamagata 992-8510 (JP); SHIBUYA, Kensuke, Yonezawa-shi, Yamagata 992-8510 (JP)
(74) Representative: Hirons, Daniel Stuart
(86) International application number: PCT/JP2024/031943
(87) International publication number: WO 2025/057862

(57) **Abstract**

A master batch used for manufacturing a near-infrared shielding transparent resin molded body contains: a polymeric dispersant containing at least an amine functional group; a solid medium containing a maleic anhydride-modified polyolefin polymer or copolymer; and complex tungsten oxide particles located in the solid medium, having a hexagonal crystal structure, and represented by a general formula MₓWO_{y} (where 0.1≤x≤1.0 and 2.0≤y<4.0).

## Description

### TECHNICAL FIELD

The present invention relates to a master batch, a composition, a near-infrared shielding transparent resin molded body, and a near-infrared shielding transparent multilayer body.

### BACKGROUND ART

It is generally known that a material containing free electrons exhibits a plasma oscillation-attributable reflection/absorption response to electromagnetic waves having a wavelength from 200 nm to 2,600 nm, which is around the sunlight wavelength region.

It is known that when particles of a powder constituting the material containing free electrons are minute particles having a diameter less than the wavelength of light, the material containing free electrons scatters light less geometrically in the visible region (ranging from 380 nm to 780 nm in wavelength) and can achieve transparency in the visible region.

In PTL 1, the applicant of the present application discloses an infrared-shielding material particle dispersion in which infrared-shielding material particles are Rdispersed in a medium, wherein the infrared-shielding material particles contain tungsten oxide particles and/or complex tungsten oxide particles, and the particle diameter of the infrared-shielding material particles is 1 nm or greater and 800 nm or less.

### CITATION LIST

### PATENT LITERATURE

PTL 1: International Publication No. WO 2005/037932

### SUMMARY OF THE INVENTION

### TECHNICAL PROBLEM

When a master batch containing complex tungsten oxide particles is molded to form a near-infrared shielding transparent resin molded body, there have been cases where the light transmissivity in the visible region is reduced. In addition, the near-infrared shielding transparent resin molded body might not have sufficient near-infrared-shielding characteristics.

An object of an aspect of the present invention is to provide a master batch that has a good light transmissivity in the visible region and an excellent near-infrared-shielding function when it is in the form of a near-infrared shielding transparent resin molded body.

### SOLUTION TO THE PROBLEM

In one aspect of the present invention, a master batch used for manufacturing a near-infrared shielding transparent resin molded body is provided, the master batch including:
a polymeric dispersant containing at least an amine functional group;
a solid medium containing a maleic anhydride-modified polyolefin polymer or copolymer; and
complex tungsten oxide particles located in the solid medium, having a hexagonal crystal structure, and represented by a general formula MₓWO_{y} (where M is one or more elements selected from H, He, alkali metal elements, alkaline earth metal elements, rare earth elements, Zr, Cr, Mn, Fe, Ru, Co, Rh, Ir, Ni, Pd, Pt, Cu, Ag, Au, Zn, Cd, Al, Ga, In, Tl, Si, Ge, Sn, Pb, Sb, B, F, P, S, Se, Br, Te, Ti, Nb, V, Mo, Ta, Re, Hf, Os, Bi, and I, and 0.1≤x≤1.0 and 2.0≤y<4.0 are satisfied).

### ADVANTAGEOUS EFFECTS OF THE INVENTION

According to one aspect of the present invention, it is possible to provide a master batch that has a good light transmissivity in the visible region and an excellent near-infrared-shielding function when it is in the form of a near-infrared shielding transparent resin molded body.

### BRIEF DESCRIPTION OF THE DRAWINGS

[FIG. 1] FIG. 1 is a schematic view of a master batch according to one embodiment of the present disclosure.
[FIG. 2] FIG. 2 is a schematic view of a near-infrared shielding transparent multilayer body according to one embodiment of the present disclosure.

### DETAILED DESCRIPTION OF THE INVENTION

Although embodiments for carrying out the present invention will be described below with reference to the drawings, the present invention is not limited to the following embodiments, and various modifications and substitutions are applicable to the following embodiments without departing from the scope of the present invention.

### [Master batch]

The inventors of the present invention have earnestly studied a master batch that has good light transmissivity in the visible region and an excellent near-infrared-shielding function when it is in the form of a near-infrared shielding transparent resin molded body. As a result, the inventors of the present invention have found it possible to solve the above problem by preparing a master batch to contain a polymeric dispersant containing a specific functional group, a solid medium containing a maleic anhydride-modified polyolefin polymer or copolymer, and complex tungsten oxide particles.

This is because the complex tungsten oxide particles in the master batch containing the polymeric dispersant containing the specific functional group, the solid medium containing the maleic anhydride-modified polyolefin polymer or copolymer, and the complex tungsten oxide particles can be prevented from agglomeration and the like during molding and the like. Therefore, a near-infrared shielding transparent resin molded body containing the master batch of the present embodiment can exhibit good light transmissivity in the visible region and an excellent near-infrared-shielding function.

The master batch of the present embodiment is a master batch used for manufacturing a near-infrared shielding transparent resin molded body. Therefore, the master batch of the present embodiment can also be referred to as a master batch for a near-infrared shielding transparent resin molded body.

The master batch of the present embodiment contains a polymeric dispersant, a solid medium, and complex tungsten oxide particles.

### (1) Components Contained in Master Batch

Hereinafter, the components (materials) contained in the master batch of the present embodiment will be described.

### (1-1) Complex Tungsten Oxide Particles

### (Composition)

The complex tungsten oxide particles have a hexagonal crystal structure and are represented by a general formula MₓWO_{y}.

In the general formula above, it is preferable that x and y satisfy 0.1≤x≤1.0 and 2.0≤y<4.0. In the general formula, M represents an element M described below, W represents tungsten, and O represents oxygen.

The addition amount x of the element M is preferably 0.1 or greater and 1.0 or less, more preferably around 0.33, and specifically, for example, 0.25 or greater and 0.39 or less. This is because the value theoretically calculated from the hexagonal crystal structure is 0.33, and particularly preferable optical characteristics can be obtained when the addition amount is around this value.

The range of y as the oxygen content is preferably 2.0≤y<4.0.

The element M contained in the complex tungsten oxide particles and denoted by M in the above general formula is not particularly limited, yet is preferably one or more elements selected from H, He, alkali metal elements, alkaline earth metal elements, rare earth elements, Zr (zirconium), Cr (chromium), Mn (manganese), Fe (iron), Ru (ruthenium), Co (cobalt), Rh (rhodium), Ir (iridium), Ni (nickel), Pd (palladium), Pt (platinum), Cu (copper), Ag (silver), Au (gold), Zn (zinc), Cd (cadmium), Al (aluminum), Ga (gallium), In (indium), Tl (thallium), Si (silicon), Ge (germanium), Sn (tin), Pb (lead), Sb (antimony), B (boron), F (fluorine), P (phosphorus), S (sulfur), Se (selenium), Br (bromine), Te (tellurium), Ti (titanium), Nb (niobium), V (vanadium), Mo (molybdenum), Ta (tantalum), Re (rhenium), Hf (hafnium), Os (osmium), Bi (bismuth), and I (iodine).

Examples of alkali metal elements include Li (lithium), Na (sodium), K (potassium), Rb (rubidium), Cs (cesium), and Fr (francium). Examples of alkaline earth metal elements include Be (beryllium), Mg (magnesium), Ca (calcium), Sr (strontium), Ba (barium), and Ra (radium). Examples of rare earth elements include Sc (scandium), Y (yttrium), La (lanthanum), Ce (cerium), Pr (praseodymium), Nd (neodymium), Pm (promethium), Sm (samarium), Eu (europium), Gd (gadolinium), Tb (terbium), Dy (dysprosium), Ho (holmium), Er (erbium), Tm (thulium), Yb (ytterbium), and Lu (lutetium).

It is more preferable that the element M contains, for example, one or more selected from Cs, Rb, K, Tl, Ba, and In. The element M may be composed of only one or more selected from Cs, Rb, K, Tl, Ba, and In.

This is because, when the element M contains one or more selected from Cs, Rb, K, Tl, Ba, and In, the complex tungsten oxide particles tend to have a hexagonal crystal structure that can particularly enhance the light transmissivity in the visible region and can also enhance the near-infrared-shielding function.

Typical examples of the material of the complex tungsten oxide particles include Cs_{0.33}WO₃, Rb_{0.33}WO₃, K_{0.33}WO₃, Ba_{0.33}WO₃, and the like. However, any material in which x and y fall within the ranges specified above can achieve useful near-infrared-shielding characteristics.

### (Particle Diameter in Dispersed State)

The complex tungsten oxide particles used as a near-infrared-shielding material in the master batch of the present embodiment absorb a large amount of light in the near-infrared region, especially around a wavelength of 1,000 nm. For this reason, the hue of the light transmitted through the complex tungsten oxide particles is often blue. The particle diameter of the complex tungsten oxide particles can be appropriately selected according to the purpose of use.

When the complex tungsten oxide particles are used for an application in which the complex tungsten oxide particles maintain transparency of light in the visible region, it is preferable that the complex tungsten oxide particles in a dispersed state have a particle diameter of 800 nm or less. In this specification, the term "transparency" is used in the sense that a material scarcely scatters light in the visible region and highly transmits light in the visible region.

This is because when the particle diameter of the complex tungsten oxide particles in the dispersed state is 800 nm or less, the complex tungsten oxide particles can maintain visibility of light in the visible region and can maintain transparency of light in the visible region efficiently at the same time, without completely shielding light by light scattering. Particularly, when transparency of light in the visible region is important, it is preferable to give greater consideration into light scattering by the particles.

When reduction of light scattering by the particles is particularly important, the particle diameter of the complex tungsten oxide particles in a dispersed state is more preferably 200 nm or less, and even more preferably 100 nm or less. This is because when the particle diameter of the complex tungsten oxide particles in the dispersed state is small, the complex tungsten oxide particles less geometrically scatter or Mie-scatter light in the visible region, and, as a result of light being less scattered by the complex tungsten oxide particles, the master batch of the present embodiment and a near-infrared-shielding film obtained by using the master batch of the present embodiment can achieve a particularly clear transparency.

That is, the particle diameter of the complex tungsten oxide particles in the dispersed state of 200 nm or less is in the Rayleigh scattering region, in which the above-described geometric scattering or Mie scattering is reduced. Because light to be scattered is reduced in proportion to the sixth power of the particle diameter in the Rayleigh scattering region, as the particle diameter in the dispersed state decreases, light scattering decreases and the transparency is improved. Furthermore, when the particle diameter in the dispersed state is 100 nm or less, light to be scattered is very scarce, which is advantageous. From the viewpoint of avoiding light scattering, the smaller the particle diameter of the complex tungsten oxide particles in the dispersed state, the better. Thus, the lower limit of the particle diameter in the dispersed state is not particularly limited. Yet, the particle diameter in the dispersed state may be, for example, 1 nm or greater because it is easy to industrially manufacture particles having a particle diameter in the dispersed state of 1 nm or greater.

The particle diameter of the complex tungsten oxide particles in the dispersed state can be measured using ELS-8000 available from Otsuka Electronics Co., Ltd., which is based on the dynamic light scattering method.

### (Method for Manufacturing Complex Tungsten Oxide Particles)

The method for manufacturing the complex tungsten oxide particles contained in the master batch of the present embodiment is not particularly limited, and may be any manufacturing method that can manufacture the complex tungsten oxide particles satisfying the general formula and the crystal structure described above.

The method for manufacturing the complex tungsten oxide particles may include, for example, a thermal treatment step of thermally treating a starting raw material in an inert gas atmosphere or a reducing gas atmosphere. The method for manufacturing the complex tungsten oxide particles may also include an oxidization treatment step of performing oxidization treatment in a milder environment after the thermal treatment step.

The starting raw material may contain a tungsten raw material containing tungsten, which serves as a supply source of tungsten. It is preferable that the tungsten raw material contains one or more selected from tungstic acid, tungsten trioxide, tungsten dioxide, tungsten oxide hydrate, tungsten hexachloride, ammonium tungstate, tungsten compound powder obtained by drying an ammonium tungstate aqueous solution, and metal tungsten. The tungsten raw material may be a powder of any material described above, or may contain a solution containing one or more selected from the materials described above.

As the tungsten oxide hydrate, it is possible to use, for example, a tungsten oxide hydrate powder obtained by dissolving tungsten hexachloride in an alcohol and then drying the resulting product, and a tungsten oxide hydrate powder obtained by dissolving tungsten hexachloride in an alcohol, adding water to allow precipitation, and then drying the precipitate.

When the starting raw material is a solution when manufacturing the complex tungsten oxide particles, the elements contained in the starting raw material can be easily and uniformly mixed. Therefore, it is more preferable to use a solution, such as an ammonium tungstate aqueous solution, a tungsten hexachloride solution, and the like, as the tungsten raw material.

The starting raw material of the complex tungsten oxide particles may also contain an element M raw material containing the element M, which serves as a supply source of the element M. As the element M raw material, it is preferable to include, for example, one or more selected from the element M simple substance, and element M-containing compounds.

Here, in order to manufacture the starting raw material in which the respective components are uniformly mixed at the molecular level, it is preferable to mix the respective raw materials in the form of a solution. Therefore, it is preferable that the element M raw material is soluble in a solvent, such as water, an organic solvent, and the like. Thus, examples of the element M raw material include tungstate, chloride, nitrate, sulfate, oxalate, oxide, carbonate, hydroxide, and the like containing the element M. Yet, these are non-limiting examples, and any element M raw material that can be prepared in the form of a solution can be suitably used.

The complex tungsten oxide particles having the above-described particle diameter in the dispersed state can be obtained by subjecting the starting raw material to the thermal treatment step of thermally treating the starting raw material in an inert gas atmosphere or a reducing gas atmosphere.

The thermal treatment condition in the inert gas atmosphere in the thermal treatment step is preferably, for example, 650°C or higher. The starting raw material thermally treated at 650°C or higher has a sufficient near-infrared-shielding function and is efficient as thermal radiation-shielding particles. The upper limit of the thermal treatment temperature in the inert gas atmosphere is not particularly limited, yet can be, for example, 1,200°C or lower. As the inert gas, an inert gas, such as Ar, N₂, and the like, can be used.

As the thermal treatment condition in the reducing gas atmosphere in the thermal treatment step, it is preferable to thermally treat the starting raw material at 300°C or higher and 1,000°C or lower in the reducing gas atmosphere first, and then thermally treat the starting raw material at 650°C or higher and 1,200°C or lower in an inert gas atmosphere. The reducing gas used in the reducing gas atmosphere is not particularly limited, yet H₂ is preferable. When using H₂ as the reducing gas, the composition of the reducing gas atmosphere is preferably a mixture in which an inert gas, such as Ar, N₂, or the like, is mixed with H₂ in an amount of 0.1% by volume or greater, and more preferably 0.2% by volume or greater. By using a reducing gas atmosphere containing 0.1% by volume or greater of H₂, it is possible to efficiently perform reduction.

When using H₂ as the reducing gas, the upper limit of the proportion of the reducing gas in the reducing gas atmosphere is not particularly limited. Yet, it is possible to use H₂ alone. Thus, the proportion of the reducing gas in the reducing gas atmosphere can be 100% by volume or less.

Inert gas, such as Ar, N₂, and the like, can be used as the inert gas in the inert gas atmosphere, which is used subsequent to the thermal treatment in the reducing gas atmosphere.

When performing the oxidization treatment in a mild environment after the thermal treatment step, the oxygen source gas is not particularly limited, yet is preferably one or more selected from oxygen, air, and water vapor. The concentration of the oxygen source may be appropriately selected in accordance with the thermal treatment temperature and the quantity of the material to be thermally treated, and is not particularly limited. The thermal treatment temperature may be appropriately selected in accordance with the quantity of the material to be thermally treated, and is not particularly limited. For example, the temperature is preferably 400°C or higher and 850°C or lower.

The complex tungsten oxide particles exhibiting the near-infrared shielding function of the present embodiment may be surface-treated with one or more selected from silane compounds, titanium compounds, aluminum compounds, and zirconium compounds. It is preferable to coat the surface of the complex tungsten oxide particles with a compound containing one or more selected from Si, Ti, Al, and Zr, because this improves weather resistance.

From the viewpoint of molding the master batch of the present embodiment and obtaining a near-infrared shielding transparent resin molded body having a desired hue, it is preferable that the powder color of the complex tungsten oxide particles satisfies the following conditions: L* being 25 or greater and 80 or less, a* being -10 or greater and 10 or less, and b* being -15 or greater and 15 or less. The hue parameters refer to the powder color in the L*a*b* color system (JIS Z 8729 (2004)) recommended by the International Commission on Illumination (CIE).

The hue of the complex tungsten oxide particles can be selected based on the conditions of the thermal treatment step and the like.

### (1-2) Polymeric Dispersant

The polymeric dispersant is used for the purpose of hydrophobizing the surface of the complex tungsten oxide particles. The polymeric dispersant can be selected in accordance with a dispersion system, which is the combination of the complex tungsten oxide particles, the solid medium, and the like.

The polymeric dispersant is preferably, for example, a polymeric dispersant containing at least an amine functional group.

The polymeric dispersant is more preferably a copolymer containing at least an amine functional group and further containing one or more functional groups selected from a hydroxyl group, a carboxyl group, a carbonyl group, a sulfo group, a phospho group, and an epoxy group.

The addition amount of the polymeric dispersant can be selected in accordance with the types of the polymeric dispersant and the complex tungsten oxide particles, the specific surface area of the complex tungsten oxide particles, and the like, and is not particularly limited. For example, the addition amount of the polymeric dispersant can be 10 parts by mass or greater and 100 parts by mass or less relative to 100 parts by mass of the complex tungsten oxide particles. That is, when the content of the complex tungsten oxide particles is 100 parts by mass, the content of the polymeric dispersant in the master batch of the present embodiment is preferably 10 parts by mass or greater and 100 parts by mass or less. It is preferable that the master batch of the present embodiment contains 10 parts by mass or greater and 100 parts by mass or less of the polymeric dispersant relative to 100 parts by mass of the complex tungsten oxide particles, because it is easy to prepare a dispersion liquid, the master batch, and the like, in which the complex tungsten oxide particles are in a particularly good dispersion state.

### (1-3) Solid Medium

### (1-3-1) Maleic Anhydride-Modified Polyolefin Polymer or Copolymer

The master batch of the present embodiment preferably contains a maleic anhydride-modified polyolefin polymer or copolymer as the solid medium. The solid medium may be composed of the maleic anhydride-modified polyolefin polymer or copolymer, or may contain another resin as described later.

It is preferable that the maleic anhydride-modified polyolefin polymer or copolymer contained in the solid medium covers, i.e., modifies, at least a part of the surface of the complex tungsten oxide particles.

For example, the solid medium may be located to cover the complex tungsten oxide particles in a manner to internally contain, i.e., envelop, the complex tungsten oxide particles.

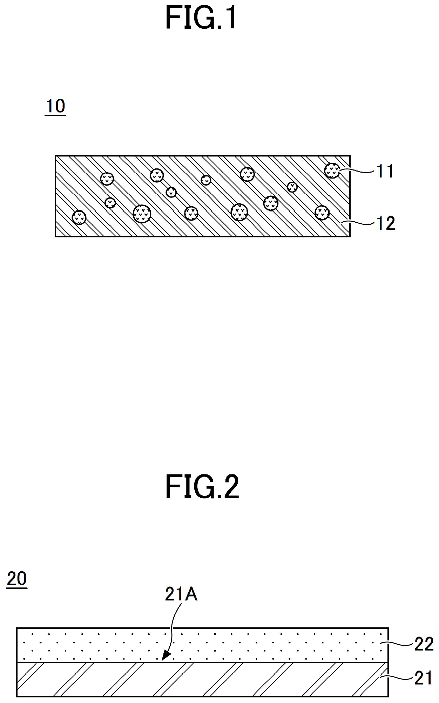

As schematically shown in FIG. 1, a master batch 10 of the present embodiment may contain, for example, complex tungsten oxide particles 11 and a solid medium 12, and the complex tungsten oxide particles 11 may be located in the solid medium 12. It is preferable that the complex tungsten oxide particles 11 are dispersed in the solid medium 12.

FIG. 1 is a schematic view, and the master batch of the present embodiment is not limited to this configuration. For example, although the complex tungsten oxide particles 11 are denoted by circles and illustrated as spherical particles in FIG. 1, the shape of the complex tungsten oxide particles 11 is not limited to this configuration, and the complex tungsten oxide particles 11 may have any shape. The complex tungsten oxide particles 11 may have, for example, a coating or the like on the surface. Although not shown in FIG. 1, the master batch 10 of the present embodiment further contains the polymeric dispersant as described above. The master batch 10 of the present embodiment may also contain other additives as necessary.

Examples of the polyolefin constituting the backbone of the maleic anhydride-modified polyolefin polymer or copolymer include one or more selected from homopolymers of polyethylene, polypropylene, polybutene, polyoctene, and the like.

The polyolefin polymer or copolymer constituting the backbone of the maleic anhydride-modified polyolefin polymer or copolymer can be one or more selected from: binary copolymers, such as ethylene/propylene copolymer, ethylene/1-butene copolymer, propylene/1-butene copolymer, propylene/1-hexene copolymer, propylene/4-methyl-1 pentene copolymer, propylene/1-octene copolymer, propylene/1-decene copolymer, propylene/1,4-hexadiene copolymer, propylene/dicyclopentadiene copolymer, propylene/5-ethylidene-2-norbornene copolymer, propylene/2,5-norbornadiene copolymer, propylene/5-ethylidene-2-norbornene copolymer, 1-octene/ethylene copolymer, 1-butene/propylene copolymer, 1-butene/1-hexene copolymer, 1-butene/4-methyl-1-pentene copolymer, 1-butene/1-octene copolymer, 1-butene/1-decene copolymer, 1-butene/1,4-hexadiene copolymer, 1-butene/dicyclopentadiene copolymer, 1-butene/5-ethylidene-2-norbornene copolymer, 1-butene/2,5-norbornadiene copolymer, 1-butene/5-ethylidene-2-norbornene copolymer, and the like; and the like.

Further, the polyolefin polymer or copolymer constituting the backbone of the maleic anhydride-modified polyolefin polymer or copolymer can be one or more selected from: multicomponent copolymers, such as ethylene/propylene/1-butene copolymer, ethylene/propylene/1-hexene copolymer, ethylene/propylene/1-octene copolymer, ethylene/propylene/1-octene copolymer, ethylene/propylene/1,4-hexadiene copolymer, ethylene/propylene/1,4-hexadiene copolymer, ethylene/propylene/dicyclopentadiene copolymer, ethylene/propylene/dicyclopentadiene copolymer, ethylene/propylene/5-ethylidene-2-norbornene copolymer, ethylene/propylene/5-ethylidene-2 norbornene copolymer, ethylene/propylene/2,5-norbornadiene copolymer, ethylene/propylene/2,5-norbornadiene copolymer, ethylene/propylene/5-ethylidene-2-norbornene copolymer, ethylene/propylene/5-ethylidene-2-norbornene copolymer, 1-butene/ethylene/propylene copolymer, 1-butene/ethylene/1-hexene copolymer, 1-butene/ethylene/1-octene copolymer, 1-butene/propylene/1-octene copolymer, 1-butene/ethylene/1,4-hexadiene copolymer, 1-butene/propylene/1,4-hexadiene copolymer, 1-butene/ethylene/dicyclopentadiene copolymer, 1-butene/propylene/dicyclopentadiene copolymer, 1-butene/ethylene/5-ethylidene-2-norbornene copolymer, 1-butene/propylene/5-ethylidene-2-norbornene copolymer, 1-butene/ethylene/2,5-norbornadiene copolymer, 1-butene/propylene/2,5-norbornadiene copolymer, 1-butene/ethylene/5-ethylidene-2-norbornene copolymer, and 1-butene/propylene/5-ethylidene-2-norbornene copolymer.

Among the polyolefin polymers or copolymers constituting the backbone of the maleic anhydride-modified polyolefin polymer or copolymer, the polyolefin polymer or copolymer is preferably one or more selected from polyethylene, polypropylene, polybutene, polyoctene, ethylene/propylene copolymer, ethylene/1-butene copolymer, propylene/1-butene copolymer, ethylene/propylene/1-butene copolymer, and 1-octene/ethylene copolymer.

### (1-3-2) Polyethylene Resin

The solid medium may contain a resin other than the maleic anhydride-modified polyolefin polymer or copolymer.

The resin other than the maleic anhydride-modified polyolefin polymer or copolymer is preferably a thermoplastic resin, considering the workability in molding, and the like. When the resin to be contained other than the maleic anhydride-modified polyolefin polymer or copolymer is a thermoplastic resin, the solid medium can suitably use a polyethylene resin as the thermoplastic resin. Therefore, the solid medium can also contain a polyethylene resin.

The polyethylene resin is not particularly limited, and examples include one or more selected from low-density polyethylene (LDPE), linear low-density polyethylene (LLDPE), high-density polyethylene (HDPE), and ethylene/vinyl acetate copolymer.

### (2) Method for Manufacturing Master Batch

The method for manufacturing the master batch of the present embodiment can include a hydrophobization/dispersion step of hydrophobizing the surface of the complex tungsten oxide particles with a polymeric dispersant and dispersing the complex tungsten oxide particles in a solid medium. As the polymeric dispersant, the polymeric dispersant containing at least an amine functional group described above can be used. As the solid medium, the maleic anhydride-modified polyolefin polymer or copolymer can be used, and a thermoplastic resin, such as polyethylene resin and the like, can also be contained.

In the hydrophobization/dispersion step, the hydrophobization step of hydrophobizing the surface of the complex tungsten oxide particles with the polymeric dispersant and the dispersion step of dispersing the complex tungsten oxide particles in the solid medium may be performed simultaneously or as separate steps.

Any method can be selected as the method for dispersing the complex tungsten oxide particles, which are particles having a near-infrared shielding function, in the solid medium in the hydrophobization/dispersion step, as long as the method can disperse the complex tungsten oxide particles in the solid medium.

For example, first, a dispersion liquid in which the complex tungsten oxide particles are dispersed in a desirable solvent (dispersion medium) is prepared by a method, such as bead milling, ball milling, sand milling, ultrasonic dispersion, and the like. Next, the dispersion liquid, the polymeric dispersant, and a powder or pellet of the solid medium, and, if necessary, other additives are melt-mixed using a mixer or a kneader while removing the solvent from the dispersion liquid.

By melt-mixing, a mixture in which the complex tungsten oxide particles are uniformly dispersed in the solid medium can be prepared, and the surface of the complex tungsten oxide particles can be hydrophobized with the polymeric dispersant. That is, the hydrophobization step and the dispersion step can be performed simultaneously.

The kneading temperature is maintained at a temperature at which the solid medium used does not decompose.

Examples of mixers that can be suitably used in the melt-mixing include a ribbon blender, a tumbler, a Nauta mixer, a Henschel mixer, a super mixer, a planetary mixer, and the like. Examples of kneaders include a Banbury mixer, a kneader, a roll, a kneader-extruder, a single-screw extruder, a twin-screw extruder, and the like.

In the hydrophobization/dispersion step, the following method can also be used as the method for hydrophobizing the surface of the complex tungsten oxide particles with the polymeric dispersant and dispersing the complex tungsten oxide particles in the solid medium.

First, the polymeric dispersant is added to a dispersion liquid of the complex tungsten oxide particles having the near-infrared shielding function, and the solvent is removed by a publicly-known method. Thus, the complex tungsten oxide particles having the surface hydrophobized with the polymeric dispersant are obtained (hydrophobization step). The powder of the complex tungsten oxide particles having the surface hydrophobized with the polymeric dispersant, which is obtained in the hydrophobization step, can be referred to as dispersoid powder or the like.

Then, the powder obtained in the hydrophobization step and a powder or pellet of the solid medium, and, if necessary, other additives, are melt-mixed. In this way, a mixture in which the complex tungsten oxide particles are uniformly dispersed in the solid medium can be prepared (dispersion step).

In this case, the hydrophobization step and the dispersion step are performed as separate steps.

A composition described later may be prepared by mixing the powder of the complex tungsten oxide particles having the surface hydrophobized with the polymeric dispersant, which is obtained in the hydrophobization step, and a powder or pellet of the solid medium, and, if necessary, other additives. For example, it is possible to manufacture the master batch and a near-infrared shielding transparent resin molded body from the composition, by: performing a dispersion step by melting the solid medium contained in the composition and subjecting the resulting product to kneading or the like; and then molding the resulting product into a desired shape.

As another method for the hydrophobization/dispersion step, a method of adding the powder of the complex tungsten oxide particles and the polymeric dispersant, which have not been subjected to dispersion, directly to the solid medium and melt-mixing the materials may be used.

In this case, the hydrophobization step and the dispersion step can be performed in one step.

The hydrophobization/dispersion step is not limited to these methods, as long as the surface of the complex tungsten oxide particles is hydrophobized with the polymeric dispersant and the complex tungsten oxide particles are dispersed in the solid medium.

The method for manufacturing the master batch of the present embodiment may further include a molding step of molding the mixture obtained in the hydrophobization/dispersion step, which is the solid medium in which the complex tungsten oxide particles are dispersed, into a pellet form.

In the molding step, the mixture obtained in the hydrophobization/dispersion step can be kneaded in a vented single-screw or twin-screw extruder to be processed into a pellet form. The master batch of the present embodiment can be obtained by the molding step.

The pellet of the master batch can be obtained by the most common method of cutting a melt-extruded strand. Therefore, examples of the shape of the master batch can include a cylindrical shape and a prismatic shape. It is also possible to employ what is generally referred to as a hot cut method of directly cutting a melt extrudate. In this case, the master batch generally has a shape close to a spherical shape.

As described above, the master batch of the present embodiment can have any form or shape. That said, it is preferable that the master batch has a size and a shape that are the same as or similar to those of a thermoplastic resin used for diluting the master batch during molding for obtaining a near-infrared shielding transparent resin molded body.

The master batch of the present embodiment can further contain common additives. For example, the master batch of the present embodiment can contain one or more dyes or pigments commonly used for coloring thermoplastic resins, that are selected from azo-based dyes, cyanine-based dyes, quinoline-based dyes, perylene-based dyes, carbon black, and the like, in order to produce a desired hue as required.

The master batch of the present embodiment may also contain one or more selected from hindered phenol-based, phosphorus-based, and like stabilizers, release agents, hydroxybenzophenone-based, salicylic acid-based, HALS-based, triazole-based, triazine-based, and like ultraviolet absorbers, coupling agents, surfactants, antistatic agents, and the like.

When the master batch of the present embodiment contains additives, such as a dye, a pigment, a stabilizer, a release agent, and the like, the contents of the additives are not particularly limited, and, for example, each additive may be added or contained in an effective expression amount in which the additive can express a predetermined function.

### [Composition]

Next, a composition of the present embodiment will be described.

The composition of the present embodiment is a composition used for manufacturing a master batch according to one embodiment of the present disclosure, and contains a polymeric dispersant, a solid medium, and complex tungsten oxide particles. The composition of the present embodiment may also be referred to as a master batch composition and the like. Further, since the composition of the present embodiment is a mixture containing components (materials), such as the polymeric dispersant and the like, the composition may also be referred to as a mixture composition, a mixture powder, and the like.

The polymeric dispersant is preferably a polymeric dispersant containing at least an amine functional group.

The solid medium is preferably a solid medium containing a maleic anhydride-modified polyolefin polymer or a copolymer.

The complex tungsten oxide particles are preferably complex tungsten oxide particles having a hexagonal crystal structure and represented by a general formula MₓWO_{y}. As the polymeric dispersant, the solid medium, and the complex tungsten oxide particles, the same materials as those described regarding the master batch can be suitably used, and the preferable content proportion of each component, such as the polymeric dispersant and the like, can also be the same as in the master batch. Therefore, the description of each material, and of the suitable content proportion and the like thereof, will be omitted.

The composition of the present embodiment needs only to contain the polymeric dispersant, the solid medium, and the complex tungsten oxide particles, and the state and location of each are not particularly limited.

For example, as a material containing the polymeric dispersant and the complex tungsten oxide particles, the dispersoid powder obtained by adding the polymeric dispersant to a dispersion liquid of the complex tungsten oxide particles and removing the solvent may be used. The dispersoid powder may have a configuration in which the polymeric dispersant is located on the surface of the complex tungsten oxide particles. Then, a mixture of the dispersoid powder and the solid medium may be used as the composition of the present embodiment. However, as described above, the form of the composition of the present embodiment is not limited to the above configuration. The composition of the present embodiment may be a mixture in which, for example, the polymeric dispersant, the solid medium, the complex tungsten oxide particles, and the like are mixed.

It is possible to obtain the master batch and a near-infrared shielding transparent resin molded body from the composition of the present embodiment, by subjecting the solid medium contained in the composition to melting, kneading, and the like, and then molding into a desired shape. The state, such as a bonding state, form, location, and the like of each component contained in the composition of the present embodiment may remain unchanged and the same or may change and become different, between before and after the component is subjected to melting, kneading, molding, and the like in order to obtain the master batch and the like. When subjecting the composition of the present embodiment to melting, kneading, molding, and the like, various additives and the like may be added as needed.

### [Near-Infrared Shielding Transparent Resin Molded Body and Near-Infrared Shielding Transparent Multilayer Body]

Next, a near-infrared shielding transparent resin molded body of the present embodiment will be described.

The near-infrared shielding transparent resin molded body of the present embodiment is a molded body containing the master batch described above.

The near-infrared shielding transparent resin molded body of the present embodiment can also be manufactured by molding the master batch according to one embodiment of the present disclosure. That is, the near-infrared shielding transparent resin molded body of the present embodiment can be a molded article composed of the master batch.

The near-infrared shielding transparent resin molded body of the present embodiment can also contain the master batch and a thermoplastic resin. The thermoplastic resin is a resin for diluting the master batch and adjusting the concentration of the complex tungsten oxide particles contained in the master batch. Therefore, the thermoplastic resin is preferably a resin of the same type as the solid medium contained in the master batch, or a resin of a different type compatible with the solid medium contained in the master batch. That is, the thermoplastic resin is preferably a resin that does not separate from, but can mix with, the master batch when kneaded with the master batch.

The solid medium contained in the master batch may contain only the maleic anhydride-modified polyolefin polymer or copolymer, or may further contain a thermoplastic resin, such as polyethylene resin or the like. For example, when the master batch contains both the maleic anhydride-modified polyolefin polymer or copolymer, and the polyethylene resin, the thermoplastic resin is preferably a resin of the same type as, or a compatible resin of a different type from, any one of: the maleic anhydride-modified polyolefin polymer or copolymer; or the polyethylene resin.

The near-infrared shielding transparent resin molded body of the present embodiment is obtained by molding the master batch, or a kneaded product of the master batch and the thermoplastic resin, into a predetermined shape.

Since the near-infrared shielding transparent resin molded body of the present embodiment is manufactured by using the master batch according to one embodiment of the present disclosure, it has scarcely experienced thermal deterioration during molding. Therefore, the complex tungsten oxide particles serving as near-infrared shielding particles have been sufficiently dispersed in the near-infrared shielding transparent resin molded body. As a result, the near-infrared shielding transparent resin molded body of the present embodiment has an excellent visible transmittance and exhibits an excellent near-infrared shielding function.

The near-infrared shielding transparent resin molded body of the present embodiment can be obtained by molding into a desired shape as required, and can be obtained by molding into a flat surface shape or a curved surface shape.

The thickness of the near-infrared shielding transparent resin molded body of the present embodiment is not particularly limited, and can be adjusted to a desired thickness as required. A resin sheet obtained by molding into a flat surface shape can further be molded into a desired shape, such as a spherical surface shape and the like, by post-processing.

The molding method of the near-infrared shielding transparent resin molded body of the present embodiment may be any method, such as injection molding, extrusion molding, compression molding, rotational molding, and the like. In particular, as the molding method of the near-infrared shielding transparent resin molded body of the present embodiment, a method for obtaining a molded article by injection molding, and a method for obtaining a molded article by extrusion molding can be suitably employed.

As a method for obtaining a plate-shaped or film-shaped molded article by extrusion molding, one method includes manufacturing by taking up a melted thermoplastic resin extruded from an extruder, such as a T-die and the like, while cooling the extrudate by a cooling roll.

The near-infrared shielding transparent resin molded body described above can be used alone as a structural material, such as a window glass, an arcade covering, and the like.

The near-infrared shielding transparent resin molded body of the present embodiment can also be used as a structural material in the form of a near-infrared shielding transparent multilayer body obtained by laminating and integrating the near-infrared shielding transparent resin molded body on another transparent molded body, such as inorganic glass, resin glass, resin film, and the like by any method.

That is, the near-infrared shielding transparent multilayer body of the present embodiment can include a transparent molded body and the near-infrared shielding transparent resin molded body of one embodiment of the present disclosure, which is laminated on the transparent molded body.

Specifically, as shown in FIG. 2, which is a schematic cross-sectional view along the lamination direction of a transparent molded body 21 and a near-infrared shielding transparent resin molded body 22, a near-infrared shielding transparent multilayer body 20 can include the transparent molded body 21 and the near-infrared shielding transparent resin molded body 22. The near-infrared shielding transparent resin molded body 22 can be located on at least one surface 21A of the transparent molded body 21.

For example, a near-infrared shielding transparent multilayer body having a near-infrared shielding function and a shatterproof function can be obtained by laminating and integrating a near-infrared shielding transparent resin molded body, which is previously obtained by molding into a film shape, on inorganic glass serving as a transparent molded body by a thermal lamination method.

A near-infrared shielding transparent multilayer body can also be obtained by performing molding for obtaining the near-infrared shielding transparent resin molded body, simultaneously with lamination and integration on another transparent molded body, by a thermal lamination method, a co-extrusion method, a press molding method, an injection molding method, and the like. The near-infrared shielding transparent multilayer body can be used as a more useful structural material in which each molded body helps the other effectively exhibit its advantages and complements the other's disadvantages mutually.

The above-described near-infrared shielding transparent resin molded body of the present embodiment and the near-infrared shielding transparent multilayer body of the present embodiment encompass a molded body containing a master batch according to one embodiment of the present disclosure.

A master batch according to one embodiment of the present disclosure contains: a polymeric dispersant containing a specific functional group; a solid medium containing a maleic anhydride-modified polyolefin polymer or copolymer; and complex tungsten oxide particles. Therefore, when molding the master batch, agglomeration and the like of the complex tungsten oxide particles can be prevented. As a result, the near-infrared shielding transparent resin molded body of the present embodiment and the near-infrared shielding transparent multilayer body of the present embodiment have good light transmissivity in the visible region and can exhibit an excellent near-infrared shielding function.

Thus far, examples in which the near-infrared shielding transparent resin molded body and the near-infrared shielding transparent multilayer body according to the present embodiment contain a master batch according to one embodiment of the present disclosure and are manufactured using a master batch according to one embodiment of the present disclosure have been shown. However, these embodiments are non-limiting. The near-infrared shielding transparent resin molded body and the near-infrared shielding transparent multilayer body according to the present embodiment may contain a composition according to one embodiment of the present disclosure and may be manufactured using a composition according to one embodiment of the present disclosure.

Therefore, the near-infrared shielding transparent resin molded body according to the present embodiment may be regarded as a molded body containing a composition according to one embodiment of the present disclosure.

When the near-infrared shielding transparent resin molded body according to the present embodiment is a molded body containing a composition according to one embodiment of the present disclosure, a composition according to one embodiment of the present disclosure may be used instead of a master batch, as the raw material for the near-infrared shielding transparent resin molded body. Except for the above point, the foregoing description will apply likewise, and will be a description in which the master batch is replaced with the composition. Thus, description will be omitted.

### [Examples]

Hereinafter, Examples of the present invention will be specifically described together with Comparative Examples. However, the present invention is not limited to the following Examples.

In each Example, the visible transmittance and the solar transmittance of a near-infrared shielding transparent resin film were measured using a spectrophotometer U-4000 obtained from Hitachi, Ltd. The solar transmittance is an index indicating the near-infrared shielding performance. The evaluation results are shown in the "Optical characteristics" field in Table 1.

### [Example 1]

### (1) Manufacture of Complex Tungsten Oxide Particles

A dry powder was prepared by dissolving 10.8 g of Cs₂CO₃ in 16.5 g of water, adding the resulting product to 50 g of H₂WO₄, and drying the resulting product in a vacuum dryer while stirring it (raw material preparation). The obtained dry powder was heated while feeding 2% by volume of H₂ gas with N₂ carrier gas, fired at a temperature of 800°C for 0.5 hours, and fired at 800°C for 1 hour in an N₂ gas atmosphere, to obtain particles a, which were complex tungsten oxide particles.

By a chemical analysis, it was confirmed that the particles a had a compositional ratio of Cs_{0.33}WO_{2.45}. The compositional ratio is shown in the "Comp. ratio" field under the "Complex tungsten oxide particles" field in Table 1. As a result of X-ray powder diffraction, it was confirmed that the diffraction line peak position of the particles a coincided with the peak position of a hexagonal crystal Cs_{0.3}WO₃. Therefore, it was confirmed that the particles a had a hexagonal crystal structure.

### (2) Manufacture of Composition and Master Batch

Next, the particles a were weighed out to be 20% by mass, a polymeric dispersant containing carbonyl and amine groups as functional groups (MMA-DMAEMA polymer), which was a copolymer of methyl methacrylate (MMA) and dimethylaminoethyl methacrylate (DMAEMA), was weighed out to be 6% by mass, and toluene was weighed out to be 74% by mass. The weighed-out materials were ground and dispersed for 24 hours in a paint shaker containing 0.3 mmφ ZrO₂ beads, to prepare a complex tungsten oxide particle dispersion liquid (liquid A).

The particle diameter of the complex tungsten oxide particles in the dispersed state in the complex tungsten oxide particle dispersion liquid (liquid A) was measured to be 20 nm. The content of the polymeric dispersant, relative to the content of the complex tungsten oxide particles in a composition or a master batch, which was regarded as 100 parts by mass, was 30 parts by mass.

The particle diameter in the dispersed state was measured by a particle size measuring device based on the dynamic light scattering method (ELS-8000 obtained from Otsuka Electronics Co., Ltd.).

Subsequently, toluene, which was the solvent, was removed from the liquid A by using a spray dryer, to obtain complex tungsten oxide particle dispersoid powder (hereinafter abbreviated as dispersoid powder A) (hydrophobization step).

The obtained dispersoid powder A and a powder of a maleic anhydride-modified ethylene/1-butene copolymer were uniformly mixed by using a blender such that the content of the complex tungsten oxide particles would be 3.5% by mass relative to the powder of the maleic anhydride-modified ethylene/1-butene copolymer, to obtain a composition.

The obtained composition was melt-kneaded at 180°C using a twin-screw extruder (dispersion step), and the extruded strands were cut into pellets, to obtain a master batch for a near-infrared shielding transparent resin molded body (hereinafter abbreviated as a master batch A) (molding step).

In Table 1, the concentration of the complex tungsten oxide particles relative to the maleic anhydride-modified polyolefin polymer or copolymer contained in the master batch is shown in the "Conc." field under the "Complex tungsten oxide particles" field. The maleic anhydride-modified polyolefin polymer or copolymer used in preparing the master batch is shown in the "Maleic anhydride-modified polyolefin" field in Table 1. The maleic anhydride-modified ethylene/1-butene copolymer is denoted as "M-E-B Copo.".

### (3) Manufacture of Near-Infrared Shielding Transparent Resin Molded Body

The obtained master batch A was hot-pressed at 130°C, to obtain a near-infrared shielding transparent resin film a, which was a near-infrared shielding transparent resin molded body having a thickness of 20 µm. The concentration of the complex tungsten oxide particles in the near-infrared shielding transparent resin molded body, relative to the solid medium, is shown in the "Particle conc." field under the "NIR shielding TP resin molded body" field in Table 1. The thickness of the near-infrared shielding transparent resin film, which was the near-infrared shielding transparent resin molded body, is shown in the "Thk." field under the "NIR shielding TP resin molded body" field in Table 1.

The optical characteristics of the near-infrared shielding transparent resin film a according to Example 1 were measured. As a result, as shown in Table 1, the solar transmittance at a visible transmittance of 76.0% was 41.6%.

### [Example 2]

In the hydrophobization step, a polymeric dispersant containing carbonyl, amine, and hydroxyl groups as functional groups (MMA-DMAEMA-HEMA polymer), which was a copolymer (HEMA) of methyl methacrylate (MMA), dimethylaminoethyl methacrylate (DMAEMA), and methacrylic acid-2-hydroxyethyl, was used as the polymeric dispersant. A composition, a master batch, and a near-infrared shielding transparent resin film b having a thickness of 20 µm according to Example 2 were obtained in the same manner as in Example 1 except for the above point.

The optical characteristics of the near-infrared shielding transparent resin film b according to Example 2 were measured. As a result, as shown in Table 1, the solar transmittance at a visible transmittance of 76.3% was 42.1%.

### [Example 3]

In the hydrophobization step, toluene in the dispersion liquid (liquid A) was removed by using a vacuum dryer, to obtain hydrophobized complex tungsten oxide particles.

A composition, a master batch, and a near-infrared shielding transparent resin film c having a thickness of 20 µm according to Example 3 were obtained in the same manner as in Example 1 except for the above point.

The optical characteristics of the near-infrared shielding transparent resin film c according to Example 3 were measured. As a result, as shown in Table 1, the solar transmittance at a visible transmittance of 76.6% was 43.9%.

### [Example 4]

When preparing a raw material for complex tungsten oxide particles, K₂CO₃ was used instead of Cs₂CO₃, and K₂CO₃ and H₂WO₄ were weighed out such that the K/W ratio by number of moles, which is the ratio of potassium to tungsten by number of moles, would be 0.33, to obtain particles d, which were complex tungsten oxide particles.

A composition, a master batch, and a near-infrared shielding transparent resin film d having a thickness of 20 µm according to Example 4 were obtained in the same manner as in Example 1 except that the particles d were used instead of the particles a.

By a chemical analysis, it was confirmed that the particles d had a compositional ratio of K_{0.33}WO_{2.45}. It was confirmed that the diffraction line peak position of the particles d coincided with the peak position of a hexagonal crystal K_{0.3}WO₃. Therefore, it was confirmed that the particles d had a hexagonal crystal structure. The particle diameter of the particles d in the dispersed state in a complex tungsten oxide particle dispersion liquid was 20 nm.

The optical characteristics of the near-infrared shielding transparent resin film d according to Example 4 were measured. As a result, as shown in Table 1, the solar transmittance at a visible transmittance of 74.1% was 45.7%.

### [Example 5]

When preparing a raw material for complex tungsten oxide particles, Rb₂CO₃ was used instead of Cs₂CO₃, and Rb₂CO₃ and H₂WO₄ were weighed out such that the Rb/W ratio by number of moles, which is the ratio of rubidium to tungsten by number of moles, would be 0.33, to obtain particles e, which were complex tungsten oxide particles.

A composition, a master batch, and a near-infrared shielding transparent resin film e having a thickness of 20 µm according to Example 5 were obtained in the same manner as in Example 1 except that the particles e were used instead of the particles a.

By a chemical analysis, it was confirmed that the particles e had a compositional ratio of Rb_{0.33}WO_{2.45}. In addition, it was confirmed that the diffraction line peak position of the particles e coincided with the peak position of a hexagonal crystal Rb_{0.33}WO₃. Therefore, it was confirmed that the particles e had a hexagonal crystal structure. The particle diameter of the particles e in the dispersed state in a complex tungsten oxide particle dispersion liquid was 20 nm.

The optical characteristics of the near-infrared shielding transparent resin film e according to Example 5 were measured. As a result, as shown in Table 1, the solar transmittance at a visible transmittance of 80.9% was 49.3%.

### [Example 6]

When preparing a raw material for complex tungsten oxide particles, BaCO3 was used instead of Cs₂CO₃, and BaCO₃ and H₂WO₄ were weighed out such that the Ba/W ratio by number of moles, which is the ratio of barium to tungsten by number of moles, would be 0.33, to obtain particles f, which were complex tungsten oxide particles.

A composition, a master batch, and a near-infrared shielding transparent resin film f having a thickness of 20 µm according to Example 6 were obtained in the same manner as in Example 1 except that the particles f were used instead of the particles a.

By a chemical analysis, it was confirmed that the particles f had a compositional ratio of Ba_{0.33}WO_{2.45}. In addition, it was confirmed that the diffraction line peak position of the particles f coincided with the peak position of a hexagonal crystal Ba_{0.21}WO₃. Therefore, it was confirmed that the particles f had a hexagonal crystal structure. The particle diameter of the particles f in the dispersed state in a complex tungsten oxide particle dispersion liquid was 20 nm.

The optical characteristics of the near-infrared shielding transparent resin film f according to Example 6 were measured. As a result, as shown in Table 1, the solar transmittance at a visible transmittance of 80.1% was 55.8%.

### [Example 7]

When preparing a raw material for complex tungsten oxide particles, Tl(NO₃)₃3H₂O was used instead of Cs₂CO₃, and Tl(NO₃)₃3H₂O and H₂WO₄ were weighed out such that the Tl/W ratio by number of moles, which is the ratio of thallium to tungsten by number of moles, would be 0.33, to obtain particles g, which were complex tungsten oxide particles.

A composition, a master batch, and a near-infrared shielding transparent resin film g having a thickness of 20 µm according to Example 7 were obtained in the same manner as in Example 1 except that the particles g were used instead of the particles a.

By a chemical analysis, it was confirmed that the particles g had a compositional ratio of Tl_{0.33}WO_{2.45}. It was confirmed that the diffraction line peak position of the particles g coincided with the peak position of a hexagonal crystal Tl_{0.3}WO₃. Therefore, it was confirmed that the particles g had a hexagonal crystal structure. The particle diameter of the particles g in the dispersed state in a complex tungsten oxide particle dispersion liquid was 20 nm.

The optical characteristics of the near-infrared shielding transparent resin film g according to Example 7 were measured. As a result, as shown in Table 1, the solar transmittance at a visible transmittance of 76.3% was 44.8%.

### [Example 8]

A maleic anhydride-modified polyethylene polymer was used instead of the maleic anhydride-modified ethylene/1-butene copolymer as a material to be mixed with the dispersoid powder A when forming the composition according to Example 1. A composition, a master batch, and a near-infrared shielding transparent resin film h having a thickness of 20 µm according to Example 8 were obtained in the same manner as in Example 1 except for the above point.

In Table 1, the maleic anhydride-modified polyethylene polymer is denoted as "M-E Pol.".

The optical characteristics of the near-infrared shielding transparent resin film h according to Example 8 were measured. As a result, as shown in Table 1, the solar transmittance at a visible transmittance of 76.1% was 45.1%.

### [Example 9 to Example 11]

The master batches obtained in Examples 1 to 3 were diluted with a low density polyethylene resin, which was a thermoplastic resin, to adjust the concentration of the complex tungsten oxide particles to be 1.0% by mass relative to the solid medium. The low density polyethylene, which is the thermoplastic resin, is denoted as "LDPE" in the Thermoplastic resin field under the "Master batch composition" field in Table 1.

The master batch of Example 1 was used in Example 9, the master batch of Example 2 was used in Example 10, and the master batch of Example 3 was used in Example 11.

A near-infrared shielding transparent resin film i having a thickness of 20 µm according to Example 9, a near-infrared shielding transparent resin film j having a thickness of 20 µm according to Example 10, and a near-infrared shielding transparent resin film k having a thickness of 20 µm according to Example 11 were obtained in the same manner as in Example 1 except for the above point.

The optical characteristics of the near-infrared shielding transparent resin film i according to Example 9, the near-infrared shielding transparent resin film j according to Example 10, and the near-infrared shielding transparent resin film k according to Example 11 were evaluated. As a result, it was confirmed that the optical characteristics shown in Table 1 were exhibited.

### [Example 12]

The master batch obtained in Example 1 was diluted with a high-density polyethylene resin, which was a thermoplastic resin, to adjust the concentration of the complex tungsten oxide particles to be 1.0% by mass relative to the solid medium. The high-density polyethylene, which is the thermoplastic resin, is denoted as "HDPE" in the Thermoplastic resin field under the "Master batch composition" field in Table 1.

A near-infrared shielding transparent resin film 1 having a thickness of 20 µm according to Example 12 was obtained in the same manner as in Example 1 except for the above point.

The optical characteristics of the near-infrared shielding transparent resin film 1 according to Example 12 were evaluated. As a result, it was confirmed that the optical characteristics shown in Table 1 were exhibited.

### [Example 13]

The master batch obtained in Example 1 was diluted with a linear low-density polyethylene resin, which was a thermoplastic resin, to adjust the concentration of the complex tungsten oxide particles to be 1.0% by mass relative to the solid medium. The linear low-density polyethylene resin, which is the thermoplastic resin, is denoted as "LLDPE" in the Thermoplastic resin field under the "Master batch composition" field in Table 1.

A near-infrared shielding transparent resin film m having a thickness of 20 µm according to Example 13 was obtained in the same manner as in Example 1 except for the above point.

The optical characteristics of the near-infrared shielding transparent resin film m according to Example 13 were evaluated. As a result, it was confirmed that the optical characteristics shown in Table 1 were exhibited.

### [Example 14]

When preparing a complex tungsten oxide particle dispersion liquid, the particles a according to Example 1 were weighed out to be 20% by mass, a polymeric dispersant having carbonyl and amine groups as functional groups was weighed out to be 20% by mass, and methyl isobutyl ketone was weighed out to be 60% by mass. In the same manner as in Example 1 except for the above point, the materials were dispersed and ground until the particle diameter of the complex tungsten oxide particles in the dispersed state in the complex tungsten oxide particle dispersion liquid became 20 nm, to prepare a complex tungsten oxide particle dispersion liquid (liquid N).

Then, methyl isobutyl ketone, which was the solvent, was removed from the liquid N by using a vacuum kneader, to obtain a complex tungsten oxide particle dispersoid powder (hereinafter, abbreviated as dispersoid powder N) (hydrophobization step).

The obtained dispersoid powder N and a powder of a maleic anhydride-modified ethylene/1-butene copolymer were uniformly mixed using a blender, such that the content of the complex tungsten oxide particles would be 10% by mass relative to the powder of the maleic anhydride-modified ethylene/1-butene copolymer, to obtain a composition.

The obtained composition was melt-kneaded at 180°C using a twin-screw extruder (dispersion step), and the extruded strands were cut into pellets to obtain a master batch for a near-infrared shielding transparent resin molded body (hereinafter abbreviated as master batch N) (molding step).

The obtained master batch N was diluted with a low-density polyethylene resin, which was a thermoplastic resin, to adjust the concentration of the complex tungsten oxide particles to be 1.0% by mass relative to the solid medium.

A near-infrared shielding transparent resin film n having a thickness of 20 µm according to Example 14 was obtained in the same manner as in Example 1 except for the above points.

The optical characteristics of the near-infrared shielding transparent resin film n according to Example 14 were evaluated. As a result, it was confirmed that the optical characteristics shown in Table 1 were exhibited.

### [Comparative Example 1]

A composition and a master batch according to Comparative Example 1 were obtained in the same manner as in Example 1 except that a powder of a low-density polyethylene resin was used instead of the powder of the maleic anhydride-modified ethylene/1-butene copolymer as the material to be mixed with the dispersoid powder A when forming the composition of Example 1. In the appearance of the master batch, color unevenness was conspicuous, and it was judged that the dispersibility of the complex tungsten oxide particles was poor. Thus, the subsequent sheet manufacture was not performed.

### [Comparative Example 2]

Polymethyl methacrylate (MMA polymer) (acrylic dispersant having an amine value of 48 mg KOH/g and a decomposition temperature of 250°C) was used as the polymeric dispersant. A composition, a master batch, and a near-infrared shielding transparent resin film o having a thickness of 20 µm according to Comparative Example 2 were obtained in the same manner as in Example 1 except for the above point.

The optical characteristics of the near-infrared shielding transparent resin film o according to Comparative Example 2 were measured. As a result, as shown in Table 1, the solar transmittance at a visible transmittance of 82.1% was 62.1%.

### [Comparative Example 3]

Polymethyl methacrylate (MMA polymer) (acrylic dispersant having an amine value of 48 mg KOH/g and a decomposition temperature of 250°C) was used as the polymeric dispersant. A composition and a master batch according to Comparative Example 3 were obtained in the same manner as in Example 1 except for the above point. Then, a film of the master batch was formed such that the visible transmittance would be 75%, to obtain a near-infrared shielding transparent resin film p. Here, the thickness of the near-infrared shielding transparent resin film p was 117 µm and the solar transmittance was 50.7%.

### [Comparative Example 4]

A copolymer of methyl methacrylate (MMA) and methacrylic acid-2-hydroxyethyl (HEMA) (MMA-HEMA polymer) was used as the polymeric dispersant.

A composition, a master batch, and a near-infrared shielding transparent resin film q having a thickness of 20 µm using the master batch according to Comparative Example 4 were obtained in the same manner as in Example 1 except for the above point.

The optical characteristics of the near-infrared shielding transparent resin film q according to Comparative Example 4 were measured. As a result, as shown in Table 1, the solar transmittance at a visible transmittance of 81.8% was 64.2%.

### [Comparative Example 5 and Comparative Example 6]

The master batches obtained in Comparative Example 2 and Comparative Example 4 were diluted with a low-density polyethylene resin, which is a thermoplastic resin, to adjust the concentration of the complex tungsten oxide particles to be 1.0% by mass relative to the solid medium.

A near-infrared shielding transparent resin film r having a thickness of 20 µm according to Comparative Example 5 and a near-infrared shielding transparent resin film s having a thickness of 20 µm according to Comparative Example 6 were obtained in the same manner as in Comparative Example 2 and Comparative Example 4 except for the above point.

The optical characteristics of the near-infrared shielding transparent resin film r according to Comparative Example 5 and the near-infrared shielding transparent resin film s according to Comparative Example 6 were evaluated. As a result, it was confirmed that the optical characteristics shown in Table 1 were exhibited.

**[Table 1-1]**

| | Master batch composition | | | | | NIR shielding TP resin molded body | | Optical characteristics [%] | |
|---|---|---|---|---|---|---|---|---|---|
| | Complex tungsten oxide particles | | Dispersant | Maleic anhydride-modified polyolefin | Thermoplastic resin | Particle conc. [% by mass] | Thk. [µm] | VT | TS |
| | Comp. ratio | Conc. [% by mass] | Type | | | | | | |
| Ex. 1 | Cs_{0.33}WO_{2.45} | 3.5 | MMA-DMAEMA Pol. | M-E-B Copo. | - | 3.5 | 20 | 76.0 | 41.6 |
| Ex. 2 | Cs_{0.33}WO_{2.45} | 3.5 | MMA-DMAEMA-HEMA Pol. | M-E-B Copo. | - | 3.5 | 20 | 76.3 | 42.1 |
| Ex. 3 | Cs_{0.33}WO_{2.45} | 3.5 | MMA-DMAEMA Pol. | M-E-B Copo. | - | 3.5 | 20 | 76.6 | 43.9 |
| Ex. 4 | K_{0.33}WO_{2.45} | 3.5 | MMA-DMAEMA Pol. | M-E-B Copo. | - | 3.5 | 20 | 74.1 | 45.7 |
| Ex. 5 | Rb_{0.33}WO_{2.45} | 3.5 | MMA-DMAEMA Pol. | M-E-B Copo. | - | 3.5 | 20 | 80.9 | 49.3 |
| Ex. 6 | Ba_{0.33}WO_{2.45} | 3.5 | MMA-DMAEMA Pol. | M-E-B Copo. | - | 3.5 | 20 | 80.1 | 55.8 |
| Ex. 7 | Tl_{0.33}WO_{2.45} | 3.5 | MMA-DMAEMA Pol. | M-E-B Copo. | - | 3.5 | 20 | 76.3 | 44.8 |
| Ex. 8 | Cs_{0.33}WO_{2.45} | 3.5 | MMA-DMAEMA Pol. | M-E Pol. | - | 3.5 | 20 | 76.1 | 45.1 |
| Ex. 9 | Cs_{0.33}WO_{2.45} | 3.5 | MMA-DMAEMA Pol. | M-E-B Copo. | LDPE | 1.0 | 20 | 83.1 | 51.1 |
| Ex. 10 | Cs_{0.33}WO_{2.45} | 3.5 | MMA-DMAEMA-HEMA Pol. | M-E-B Copo. | LDPE | 1.0 | 20 | 83.6 | 51.9 |

**[Table 1-2]**

| | | | | | | | | | |
|---|---|---|---|---|---|---|---|---|---|
| Ex. 11 | Cs_{0.33}WO_{2.45} | 3.5 | MMA-DMAEMA Pol. | M-E-B Copo. | LDPE | 1.0 | 20 | 83.3 | 53.7 |
| Ex. 12 | Cs_{0.33}WO_{2.45} | 3.5 | MMA-DMAEMA Pol. | M-E-B Copo. | HDPE | 1.0 | 20 | 83.3 | 51.2 |
| Ex. 13 | Cs_{0.33}WO_{2.45} | 3.5 | MMA-DMAEMA Pol. | M-E-B Copo. | LLDPE | 1.0 | 20 | 83.5 | 51.3 |
| Ex. 14 | Cs_{0.33}WO_{2.45} | 10 | MMA-DMAEMA Pol. | M-E-B Copo. | LDPE | 1.0 | 20 | 83.7 | 52.2 |
| Comp. Ex. 1 | Cs_{0.33}WO_{2.45} | 3.5 | MMA-DMAEMA Pol. | - | LDPE | - | - | - | - |
| Comp. Ex. 2 | Cs_{0.33}WO_{2.45} | 3.5 | MMA Pol. | M-E-B Copo. | - | 3.5 | 20 | 82.1 | 62.1 |
| Comp. Ex. 3 | Cs_{0.33}WO_{2.45} | 3.5 | MMA Pol. | M-E-B Copo. | - | 3.5 | 117 | 75.0 | 50.7 |
| Comp. Ex. 4 | Cs_{0.33}WO_{2.45} | 3.5 | MMA-HEMA Pol. | M-E-B Copo. | - | 3.5 | 20 | 81.8 | 64.2 |
| Comp. Ex. 5 | Cs_{0.33}WO_{2.45} | 3.5 | MMA Pol. | M-E-B Copo. | LDPE | 1.0 | 20 | 89.2 | 71.6 |
| Comp. Ex. 6 | Cs_{0.33}WO_{2.45} | 3.5 | MMA-HEMA Pol. | M-E-B Copo. | LDPE | 1.0 | 20 | 89.0 | 74.1 |

As shown in Table 1, the near-infrared shielding transparent resin films according to Example 1 to Example 14 had a visible transmittance of 74% or higher and solar transmittance of 56% or lower.

On the other hand, in the appearance of the master batch of Comparative Example 1, color unevenness was conspicuous, and it was judged that the dispersibility of the complex tungsten oxide particles was poor. Thus, the subsequent sheet manufacture was not performed.

The near-infrared shielding transparent resin films according to Comparative Example 2 and Comparative Examples 4 to 6 had a visible transmittance of 74% or higher, but had a solar transmittance of 62% or higher. Thus, it was confirmed that they were inferior in solar radiation shielding characteristics.

Although the near-infrared shielding transparent resin film according to Comparative Example 3 had a visible transmittance of 74% or higher and a solar transmittance of 56% or lower, it was confirmed that it was inferior in solar radiation shielding characteristics compared with the near-infrared shielding transparent resin films according to Example 1 to Example 8 having the same particle concentration.

The present application claims priority to Japanese Patent Application No. 2023-147506, filed with the Japan Patent Office on September 12, 2023, and the entire contents of Japanese Patent Application No. 2023-147506 are incorporated herein.

### REFERENCE SIGNS LIST

10: master batch
11: complex tungsten oxide particles
12: solid medium
20: near-infrared shielding transparent multilayer body
21: transparent molded body
21A: one surface
22: near-infrared shielding transparent resin molded

## Claims

1. A master batch used for manufacturing a near-infrared shielding transparent resin molded body, the master batch comprising:
a polymeric dispersant containing at least an amine functional group;
a solid medium containing a maleic anhydride-modified polyolefin polymer or copolymer; and
complex tungsten oxide particles located in the solid medium, having a hexagonal crystal structure, and represented by a general formula MₓWO_{y} (where M is one or more elements selected from H, He, alkali metal elements, alkaline earth metal elements, rare earth elements, Zr, Cr, Mn, Fe, Ru, Co, Rh, Ir, Ni, Pd, Pt, Cu, Ag, Au, Zn, Cd, Al, Ga, In, Tl, Si, Ge, Sn, Pb, Sb, B, F, P, S, Se, Br, Te, Ti, Nb, V, Mo, Ta, Re, Hf, Os, Bi, and I, and 0.1≤x≤1.0 and 2.0≤y<4.0 are satisfied).

2. The master batch according to claim 1,
wherein the solid medium contains a polyethylene resin.

3. The master batch according to claim 1 or 2,
wherein the polymeric dispersant is a copolymer further containing one or more functional groups selected from a hydroxyl group, a carboxyl group, a carbonyl group, a sulfo group, a phosphor group, and an epoxy group.

4. The master batch according to claim 1 or 2,
wherein a content of the polymeric dispersant is 10 parts by mass or greater and 100 parts by mass or less when a content of the complex tungsten oxide particles is regarded to be 100 parts by mass.

5. The master batch according to claim 1 or 2,
wherein the element M contained in the complex tungsten oxide particles contains one or more selected from Cs, Rb, K, Tl, Ba and In.

6. The master batch according to claim 1 or 2,
wherein a particle diameter of the complex tungsten oxide particles in a dispersed state is 200 nm or less.

7. A composition used for manufacturing the master batch of claim 1 or 2, the composition comprising:
a polymeric dispersant containing at least an amine functional group;
a solid medium containing a maleic anhydride-modified polyolefin polymer or copolymer; and
complex tungsten oxide particles having a hexagonal crystal structure and represented by a general formula MₓWO_{y} (where M is one or more elements selected from H, He, alkali metal elements, alkaline earth metal elements, rare earth elements, Zr, Cr, Mn, Fe, Ru, Co, Rh, Ir, Ni, Pd, Pt, Cu, Ag, Au, Zn, Cd, Al, Ga, In, Tl, Si, Ge, Sn, Pb, Sb, B, F, P, S, Se, Br, Te, Ti, Nb, V, Mo, Ta, Re, Hf, Os, Bi, and I, and 0.1≤x≤1.0 and 2.0≤y<4.0 are satisfied).

8. A near-infrared shielding transparent resin molded body, which is a molded body containing the master batch of claim 1 or 2.

9. A near-infrared shielding transparent multilayer body, comprising:
a transparent molded body; and
the near-infrared shielding transparent resin molded body of claim 8 laminated on the transparent molded body.
